# EUROPEAN PATENT APPLICATION

(11) **EP 3 425 200 A1**
(43) Date of publication of application: **09.01.2019**
(21) Application number: 16892628.5
(22) Date of filing: 02.05.2016
(51) Int. Cl.: F03G 3/00, F03G 3/08

(54) **METHOD FOR GENERATING PROPULSIVE FORCE WITHOUT EMPLOYING REACTION DUE TO SUBSTANCE**

(30) Priority: 01.03.2016 JP 2016038496
(71) Applicant: Narahara, Yutaka, Sagamihara-shi, Kanagawa252-0206 (JP)
(72) Inventor: Narahara, Yutaka, Sagamihara-shi, Kanagawa252-0206 (JP)
(74) Representative: Chas. Hude A/S
(86) International application number: PCT/JP2016/063563
(87) International publication number: WO 2017/149789

(57) **Abstract**

According to the present invention, a propulsive force is generated without employing a reaction due to a substance. Instead of a reaction, an interaction with a resistance exhibited by a substance performing an orbital motion against a force causing a change in the angle of inclination of the orbital trajectory of the substance is used as a propulsive force. This interaction is generated through a combination of the orbital motion and a rotating motion.

## Description

### [Detailed Description of the Invention]

### [Technical Field]

The present invention relates to a method for generating a propulsive force without using reaction of a substance.

### [Background Art]

All conventional propulsive forces are obtained by a method in which a propulsion apparatus exerts action on a substance toward its rear external environment thereby generating reaction force to be used for the propulsive forces.

### [Summary of Invention]

### [Technical Problem]

A propulsion apparatus using the conventional method needs to expose a part or all of a propeller, a rotor blade, a jet engine, or the like to the external environment. The exposed portion is thus likely to accidentally contact an object in the external environment and also acts as a source of noise.

The present invention is used as means for solving problems attributed to the conventional method using reaction of a substance as a propulsive force, to accomplish an object to generate a propulsive force without using reaction of a substance.

### [Solution to Problem]

When a YZ plane in a three-dimensional orthogonal coordinate system is designated as a reference plane and (1) to (3) below are defined:
(1) an inclined circling trajectory A: a circling trajectory having an origin at a center thereof and having an inclination angle of 30° to 45° relative to each of a Y axis and a Z axis,
(2) a rotation axis B: an axis passing through Z = 0 and parallel to an X axis and also passing outside the inclined circling trajectory A, and
(3) a substance C: a substance making a circling motion along the inclined circling trajectory A,
rotary motion of at least one inclined circling trajectory A around the rotation axis B and circling motion of the substance C are performed simultaneously and continuously so that each time the inclined circling trajectory A rotates through 180° around the rotation axis B, a change in the inclination angle is caused for the circling trajectory of the substance C by up to 90° relative to each of the Y axis and the Z axis, and interaction with the resistance exhibited by the substance C against the change is used as a propulsive force.

### [Advantageous Effects of Invention]

The propulsion apparatus using the present invention uses no reaction, and thus, needs no portion exposed to an external environment. This allows the propulsion apparatus to be installed and operated in a vacuum closed space.

This feature allows the propulsion apparatus using the present invention to solve both problems regarding accidental contact with an object in the external environment and noise caused by the propulsion apparatus.

### [Brief Description of Drawings]

[Fig. 1]

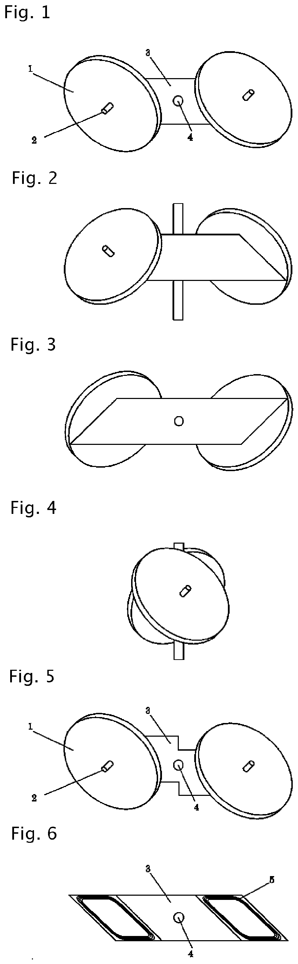

   Fig. 1 is a plan view of a propulsion apparatus example using physical tops according to an embodiment of the present invention, as seen in an X axis direction.
[Fig. 2]
   Fig. 2 is a front view of the propulsion apparatus example in Fig. 1 as seen in a Z axis direction.
[Fig. 3]
   Fig. 3 is a bottom view of the propulsion apparatus example in Fig. 1.
[Fig. 4]
   Fig. 4 is a side view of the propulsion apparatus example as seen in a Y axis direction.
[Fig. 5]
   Fig. 5 is a plan view of a propulsion apparatus example that is similar to the propulsion apparatus example in Fig. 1 and to which claim 2 is applied.
[Fig. 6]
   Fig. 6 is a plan view of a propulsion apparatus example using coils according to the embodiment of the present invention, as seen in the X axis direction.
[Fig. 7]

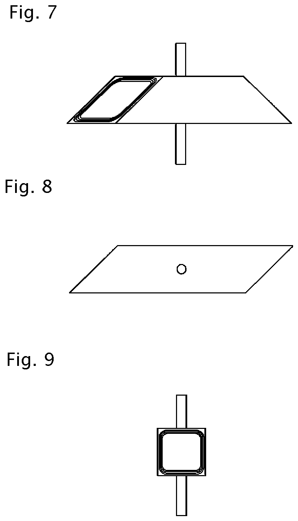

   Fig. 7 is a front view of the propulsion apparatus example in Fig. 6 as seen in the Z axis direction.
[Fig. 8]
   Fig. 8 is a bottom view of the propulsion apparatus example in Fig. 6.
[Fig. 9]
   Fig. 9 is a side view of the propulsion apparatus example in Fig. 6 as seen in the Y axis direction.

### [Description of Embodiments]

Two examples will be described below.

### [Example 1]

Fig. 1 is a plan view of a propulsion apparatus example using physical tops, as seen in an X axis direction.

The propulsion apparatus example includes two physical tops 1 each including a perpendicular driving shaft 2 at the center of the top.

The two driving shafts 2 are supported by a rotation apparatus 3 with the two driving shafts 2 placed respectively on a right side and a left side of the center of the apparatus 3 at an equal distance from the center, and the rotation apparatus 3 has a perpendicular rotation driving shaft 4 at the center thereof. The two driving shafts 2 are positioned and inclined such that, when the rotation apparatus 3 is driven by the rotation driving shaft 4, the two physical tops 1 function as two inclined circling trajectories A which rotate around rotation axis B and are displaced from each other by 180°.

In this embodiment, the propulsion apparatus having features as described above can implement the process in which: with the physical tops 1 driven by the driving shafts 2, the rotation apparatus 3 is driven by the rotation driving shaft 4, thereby generating circling motion of a substance constituting each of the physical tops 1 along the inclined circling trajectory A and causing a change in the inclination angle of the trajectory; interaction with the resistance exhibited by the physical tops 1 against the change is then used as a propulsive force.

Usage of the propulsion apparatus will be described below.

When the rotation apparatus 3 is rotated by the rotation driving shaft 4 to cause circling motion on the circling trajectory such that a front face formed by the circling trajectory observable in the X axis direction advances as a forward face, a propulsive force is generated on the rear face of the circling trajectory in the X axis direction.

When the rotation apparatus 3 is rotated by the rotation driving shaft 4 to cause circling motion on the circling trajectory such that a front face formed by the circling trajectory observable in the X axis direction advances as a rearward face, a propulsive force is generated on the front face of the circling trajectory in the X axis direction.

### [Example 2]

Fig. 6 is a plan view of a propulsion apparatus example using coils as seen in the X axis direction.

The propulsion apparatus example includes two coils 5.

The two coils 5 are positioned in a rotation apparatus 3 on a right side and a left side of the center of the apparatus 3 at an equal distance from the center, the rotation apparatus 3 has a perpendicular rotation driving shaft 4 at the center thereof. The two coils 5 are inclined such that, when the rotation apparatus 3 is driven by the rotation driving shaft 4, the coils 5 function as two inclined circling trajectories A which rotate around respective rotation axis B and are displaced from each other by 180°.

In the embodiment, the propulsion apparatus having features described above can implement the process in which: with a current passed through each of the coils 5, the rotation apparatus 3 is driven by the rotation driving shaft 4, thereby generating circling motion along the corresponding inclined circling trajectory A due to electrons flowing through the coil 5 and causing a change in the inclination angle of the trajectory; interaction with resistance exhibited by the electrons as a substance against the change is then used as a propulsive force.

The examples have been described above.

### [Reference Signs List]

- 1: Physical top
- 2: Driving shaft
- 3: Rotation apparatus
- 4: Rotation driving shaft
- 5: Coil

## Claims

1. An apparatus for generating a propulsive force without using reaction of a substance, wherein
when a YZ plane in a three-dimensional orthogonal coordinate system is designated as a reference plane and (1) to (3) below are defined:
(1) an inclined circling trajectory A: a circling trajectory having an origin at a center thereof and having an inclination angle of 30° to 45° relative to each of a Y axis and a Z axis,
(2) a rotation axis B: an axis passing through Z = 0 and parallel to an X axis and also passing outside the inclined circling trajectory A, and
(3) a substance C: a substance making a circling motion along the inclined circling trajectory A,
rotary motion of at least one inclined circling trajectory A around the rotation axis B and circling motion of the substance C are performed simultaneously and continuously so that each time the inclined circling trajectory A rotates through 180° around the rotation axis B, a change in the inclination angle is caused for the circling trajectory of the substance C by up to 90° relative to each of the Y axis and the Z axis, and interaction with the resistance exhibited by the substance C against the change is used as a propulsive force.

2. The apparatus according to claim 1, wherein, in the orthogonal coordinate system according to claim 1, when an axis passing through Z ≠ 0 and parallel to the X axis and also passing outside the inclined circling trajectory A is defined as a rotation axis B2, the rotation axis B2 is used instead of the rotation axis B.
